# EUROPEAN PATENT APPLICATION

(11) **EP 1 878 630 A2**
(43) Date of publication of application: **16.01.2008**
(21) Application number: 07110456.6
(22) Date of filing: 18.06.2007
(51) Int. Cl.: B60T 8/32, B60T 7/04

(54) **Brake system, stroke simulator disconnecting mechanism, and stroke simulator disconnecting method**

(30) Priority: 12.07.2006 JP 2006191655
(71) Applicant: Toyota Jidosha Kabushiki Kaisha, Toyota-shi Aichi 471-8571 (JP)
(72) Inventor: Miyazaki, Tetsuya c/o TOYOTA JIDOSHA KABUSHIKI KAISHA, Aichi-ken Aichi 471-8571 (JP); Okano, Takahiro c/o TOYOTA JIDOSHA KABUSHIKI KAISHA, Aichi-ken Aichi 471-8571 (JP)
(74) Representative: Winter, Brandl, Fürniss, Hübner Röss, Kaiser, Polte Partnerschaft Patent- und Rechtsanwaltskanzlei

(57) **Abstract**

A brake system includes a master cylinder (14) that pressurizes hydraulic fluid when a brake control portion (12) is operated; a stroke simulator (24) that, when supplied with the hydraulic fluid pressurized by the master cylinder (14), produces reactive force in response to the operation of the brake control portion; and a stroke simulator disconnecting mechanism (58,63,25,56,59,78), provided in a hydraulic passage between the master cylinder (14) and the stroke simulator (24), that mechanically interrupts the flow of the hydraulic fluid through the hydraulic passage when the hydraulic fluid is allowed to flow from the master cylinder (14) to the wheel cylinder (20) in response to the operation of the brake control portion. The stroke simulator disconnecting mechanism (58,63,25,56,59,78) starts the disconnecting operation before the hydraulic fluid flows from the master cylinder (14) to the stroke simulator (24).

## Description

### BACKGROUND OF THE INVENTION

### 1. Field of the Invention

The invention relates to a brake system that includes a stroke simulator disconnecting mechanism that interrupts the connection between a master cylinder and a stroke simulator that produces reactive force in response to a braking operation by a driver

### 2. Description of the Related Art

A brake system of a vehicle includes a stroke simulator that enables a brake pedal to travel a distance corresponding to the operation force applied to the brake pedal, such as the one described in JP-A-2000-95093. In such a brake system, during normal brake control, the flow of hydraulic fluid from the master cylinder to the wheel cylinders is interrupted, and the hydraulic fluid, which is discharged from the master cylinder in response to the operation of the brake pedal by the driver, flows into the stroke simulator, and the stroke simulator in turn produces reactive force accordingly.

When it becomes necessary to supply hydraulic fluid from the master cylinder to the wheel cylinders, such as when a certain abnormality occurs, the stroke simulator is disconnected from the master cylinder so that hydraulic fluid is supplied to the wheel cylinders. However, in reality, a certain amount of hydraulic fluid flows out from the master cylinder to the stroke simulator while the stroke simulator is the process of disconnecting from the master cylinder, and the hydraulic fluid that flows out to the stroke simulator at this time does not contribute to generation of braking force.

### SUMMARY OF THE INVENTION

The invention provides enables a more efficient use of hydraulic fluid in a master cylinder when a certain abnormality occurs.

One aspect of the invention relates to a brake system including: a master cylinder that includes a cylinder chamber containing hydraulic fluid that is pressurized in accordance with an amount by which a brake control portion is operated; a wheel cylinder that applies a braking force to a wheel when supplied with the hydraulic fluid; a stroke simulator that, when supplied with the hydraulic fluid, produces reactive force in response to the operation of the brake control portion; a stroke simulator disconnecting mechanism, provided in a hydraulic passage that extends from the cylinder chamber of the master cylinder to the stroke simulator, that disconnects the stroke simulator from the master cylinder when the hydraulic fluid flows from the master cylinder to the wheel cylinder by mechanically interrupting a flow of the hydraulic fluid through the hydraulic passage in response to the operation of brake control portion, the stroke simulator disconnecting mechanism being adapted to start the disconnecting operation before the hydraulic fluid flows from the master cylinder to the stroke simulator in response to the operation of the brake control portion.

According to this structure, because the disconnecting operation of the stroke simulator disconnecting mechanism starts before the hydraulic fluid flows from the master cylinder to the stroke simulator, the amount of hydraulic fluid that flows out from the master cylinder to the stroke simulator in the process of disconnecting operation of the stroke simulator disconnecting mechanism decreases, that is, a larger amount of hydraulic fluid can be supplied from the master cylinder to the wheel cylinder. As such, the brake system according to the first aspect of the invention improves the efficiency of use of hydraulic fluid in the master cylinder.

The brake system described above may be such that: a master piston in which an in-piston passage is formed, is slidably provided in the master cylinder, wherein the in-piston passage forms a portion of the hydraulic passage, and the stroke simulator disconnecting mechanism mechanically interrupts the flow of the hydraulic fluid through the hydraulic passage by sliding the master piston, and causes the master piston to start sliding before the hydraulic fluid flows from the master piston to the stroke simulator in response to the operation of the brake control portion.

According to this structure, the disconnecting operation of the stroke simulator disconnecting mechanism is accomplished by the sliding of the master piston before the hydraulic fluid flows from the master cylinder to the stroke simulator. Thus, the amount of hydraulic fluid that flows out from the master cylinder to the stroke simulator in the process of the disconnecting operation of the stroke simulator disconnecting mechanism decreases.

The brake system described above may be such that: the master piston includes a first piston that is slidably provided in the master cylinder and is linked to the brake control portion and a second piston that is slidably provided in the master cylinder and is linked to the brake control portion via the first piston, the in-piston passage being formed in the second piston; the stroke simulator includes a simulator piston that moves when supplied with the hydraulic fluid pressurized by the master cylinder; and the stroke simulator disconnecting mechanism mechanically interrupts the flow of the hydraulic fluid through the hydraulic passage by sliding the second piston, and is adapted to cause the second piston to start sliding before the simulator piston starts moving in response to the operation of the brake control portion.

According to this structure, because the second piston starts sliding before the simulator piston starts moving, that is, the timing at which the second piston starts sliding is set earlier than the time at which the simulator piston starts moving, the disconnecting operation of the stroke simulator disconnecting mechanism starts before the volume of hydraulic fluid in the stroke simulator begins to increase. Therefore, the amount of hydraulic fluid that flows out from the master cylinder to the stroke simulator in the process of the disconnecting operation of the stroke simulator disconnecting mechanism decreases. As such, the hydraulic fluid can be efficiently supplied to the wheel cylinders.

The brake system described above may be such that: the master cylinder includes a second elastic member that impels the second piston towards an initial position of the second piston; the stroke simulator includes a simulator elastic member that impels the simulator piston towards an initial position of the simulator piston; and the mounting load of the simulator elastic member is larger than the mounting load of the second elastic member.

According to this structure, because the mounting load of the simulator elastic member is set larger than the mounting load of the second elastic member, the second elastic member more easily deforms than the simulator elastic member does in response to the operation of the brake control portion. That is, the second elastic member reliably starts sliding before the simulator piston starts moving.

In addition, the brake system described above may be such that: the master cylinder includes a first elastic member that impels the first piston towards an initial position of the first piston; and the mounting load of the second elastic member is smaller than the mounting load of the first elastic member.

According to this structure, because the mounting load of the second elastic member is relatively small, the mounting load of the simulator piston can be made small accordingly. Thus, the freedom in designing the stroke simulator increases and therefore the influences on the brake feeling can be reduced.

In addition, the brake system described above may be such that: the master cylinder includes a link member via which the first piston and the second piston are linked to each other, the link member is arranged to define an initial interval between the first piston and the second piston and to prohibit the first piston and the second piston to move away from each other beyond the initial interval and allow the first piston and the second piston to move towards each other; and the link member is arranged to set an initial state in which the interval between the first piston and the second piston equals the initial interval, and in which the mounting load of the first elastic member acts on the first elastic member.

According to this structure, because the link member is arranged to set an initial state in which the interval between the first piston and the second piston is equal to the initial interval, and in which a predetermined mounting load acts on the first piston, the mounting load of the first elastic member and the mounting load of the second elastic member can be made different from each other, and therefore, for example, the mounting load of the second elastic member can be made smaller than the mounting load of the first elastic member.

In addition, the brake system described above may be such that: the master cylinder includes a first elastic member that impels the first piston towards an initial position of the first piston; a mounting load of the first elastic member is smaller than a mounting load of the second elastic member; and a spring constant of the first elastic member is greater than a spring constant of the second elastic member.

According to this structure, setting the mounting loads and the spring constants of the first elastic member and the second elastic member as described above reduces the amount of movement of the second piston, and thus reduces the design requirements regarding the endurance of seal members for the second piston.

Another aspect of the invention relates to a stroke simulator disconnecting mechanism of a brake system, including a disconnecting portion, provided on a hydraulic passage that extends from the cylinder chamber of a master cylinder to a stroke simulator, that, in a state where hydraulic fluid flows from the master cylinder to a wheel cylinder, disconnects the stroke simulator from the master cylinder by mechanically interrupting a flow of the hydraulic fluid through the hydraulic passage in response to the operation of the brake control portion. The disconnecting portion is arranged to start interrupting the flow of the hydraulic fluid through the hydraulic passage before the hydraulic fluid flows from the master cylinder to the stroke simulator in response to the operation of the brake control portion.

Another aspect of the invention relates to a method for disconnecting a stoke simulator of a brake system, including starting, when it becomes necessary to supply hydraulic fluid from a master cylinder to a wheel cylinder, interrupting a flow of hydraulic fluid through a hydraulic passage between the master cylinder and a stroke simulator before the hydraulic fluid flows from the master cylinder to the stroke simulator in response to an operation of a brake control portion.

### BRIEF DESCRIPTION OF THE DRAWINGS

The foregoing and further objects, features and advantages of the invention will become apparent from the tracking description of example embodiments with reference to the accompanying drawings, wherein like numerals are used to represent like elements and wherein:
FIG. 1 is a diagram showing a brake control system according to the first embodiment of the invention;
FIG. 2 is a cross-sectional view schematically showing a cross section of the master cylinder in the first embodiment;
FIG. 3 is a cross-sectional view schematically showing a cross section of the stroke simulator;
FIG. 4 is a cross-sectional view showing the cross sections of the main portions of the master cylinder in the second embodiment;
FIG. 5 is a graph that schematically illustrates the relation between the travel of each piston and the travel of the brake pedal in the second embodiment; and
FIG. 6 is a graph that schematically illustrates the relation between the travel of each piston and the travel of the brake pedal in the third embodiment.

### DETAILED DESCRIPTION OF THE EXEMPLARY EMBODIMENTS

Hereinafter, example embodiments of the invention will be described with reference to the accompanying drawings.

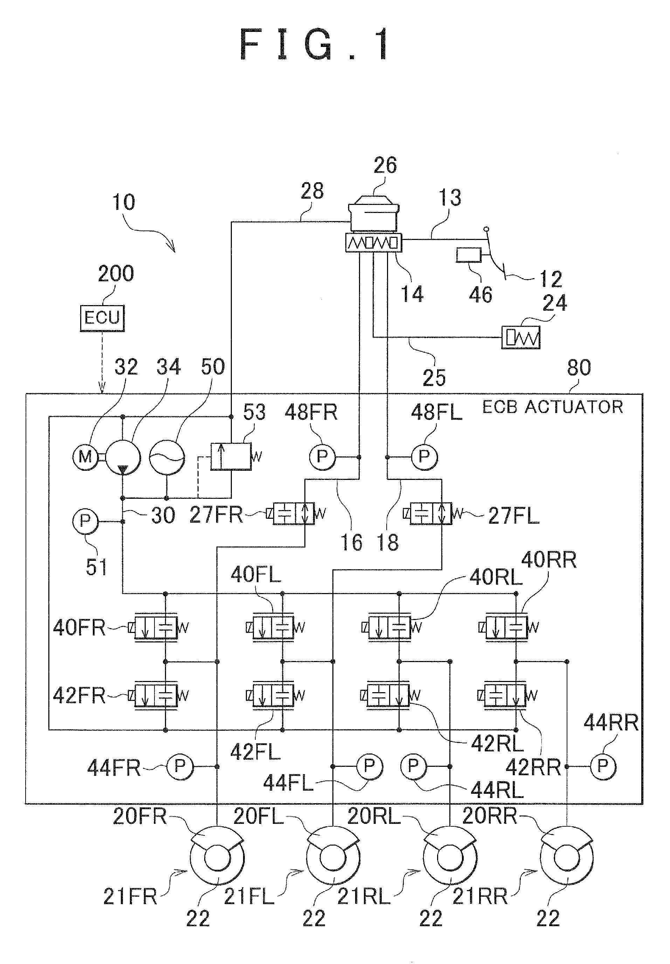

FIG. 1 is a diagram showing a brake control system 10 according to the first embodiment of the invention. The brake control system 10 shown in FIG. 1 is an electronic control brake system (ECB) for a vehicle, which independently controls the brake devices provided at the four wheels of the vehicle in response to a brake pedal 12 being operated by the driver of the vehicle. The brake pedal 12 may be regarded as a brake control portion. Although not shown in the drawings, the vehicle having the brake control system 10 according to the first embodiment also includes a steering device through which the steered wheels of the four wheels of the vehicle are steered and a drive power source, such as an internal combustion engine and a electric motor, which drive the drive wheels among the four wheels of the vehicle.

Disc brake units 21FR, 21FL, 21RR, and 21RL apply braking force to the front-right wheel, the front-left wheel, the rear-right wheel, and the rear-left wheel of the vehicle, respectively. The disc brake units 21FR, 21FL, 21RR, and 21RL include wheel cylinders 20FR, 20FL, 20RR, and 20RL, respectively. Each of the wheels cylinders 20FR to 20RL is provided within a brake caliper. Also, each of the disc brake units 21 FR to 21RL includes a brake disc 22. The wheel cylinders 20FR to 20 RL are connected to an ECB actuator 80 via independent fluid passages. Hereinafter, the wheel cylinders 20FR to 20RL will be collectively referred to as "wheel cylinders 20" where appropriate.

In each of the disc brake units 21 FR to 21RL, when brake fluid is supplied to the wheel cylinders 20 from the ECB actuator 80, a brake pad, which is a friction member, is pressed against each of the brake discs 22, so that a braking force is applied to the wheel of the vehicle. While the disc brake units 21FR to 21RL are employed in the first embodiment, other braking force applying devices that use wheel cylinders, such as drum brake units, may alternatively be employed, or braking force applying devices that use electric actuators, such as electric motors, to control the pressures with which the friction members of the respective brakes are pressed against the wheels of the vehicle, rather than using hydraulic systems or devices, may alternatively be employed.

The brake pedal 12 is connected to a master cylinder 14 that pressurizes and discharges brake fluid, which is hydraulic fluid, in response to the brake pedal 12 being stepped down by the driver of the vehicle. The brake pedal 12 is connected to the master cylinder 14 through an input rod 13. A stroke sensor 46 is provided at the brake pedal 12 to detect the amount by which the brake pedal 12 is depressed. One of the output ports of the master cylinder 14 is connected to a stroke simulator 24 that produces reactive force in accordance with the force with which the brake pedal 12 is operated. The master cylinder 14 and the stroke simulator 24 are connected to each other via a simulator pipe 25.

A brake hydraulic pressure control pipe 16 for the front-right wheel is connected at one end to one of the output ports of the master cylinder 14 and at the other end to the wheel cylinder 20FR that applies a braking force to the front-right wheel, which is not shown in the drawings. On the other hand, a brake hydraulic pressure control pipe 18 for the front-left wheel is connected at one end to another output port of the master cylinder 14 and at the other end to the wheel cylinder 20FL that applies a braking force to the front-left wheel, which is not shown in the drawings. A right master-cut valve 27FR is provided midway in the brake hydraulic pressure control pipe 16, and a left master-cut valve 27FL is provided midway in the brake hydraulic pressure control pipe 18. The right master-cut valve 27FR and the left master-cut valve 27FL are electromagnetic valves that are open when not energized, and are energized to be closed when it is detected that the brake pedal 12 being operated by the driver of the vehicle. That is, the right master-cut valve 27FR and the left master-cut valve 27FL are so-called normally-open electromagnetic valves. A reservoir tank 26 that stores brake fluid is connected to the master cylinder 14.

A right master pressure sensor 48FR that detects the master cylinder pressure in the hydraulic passage to the front-right wheel is provided midway in the brake hydraulic pressure control pipe 16, and a left master pressure sensor 48FL that detects the master cylinder pressure in the hydraulic passage to the front-left wheel is provided midway in the brake hydraulic pressure control pipe 18. While the stroke sensor 46 is used to detect the amount by which the brake pedal 12 is depressed , the force with which the brake pedal 12 is being depresseed by the driver of the vehicle may be determined from the master cylinder pressures detected by the right master pressure sensor 48FR and the left master pressure sensor 48FL, and monitoring the master cylinder pressures using the two pressure sensors 48FR and 48FL as a desirable failsafe operation against a failure of the stroke sensor 46.
Hereinafter, the right master pressure sensor 48FR and the left master pressure sensor 48FL will be collectively referred to as "master cylinder sensors 48" where appropriate.

One end of a hydraulic pipe 28 is connected to the reservoir tank 26, and the other end of the hydraulic pipe 28 is connected to the inlet of a hydraulic pump 34 that is driven by a motor 32. A high-pressure pipe 30 is connected to the outlet of the hydraulic pump 34, and an accumulator 50 and a relief valve 53 are connected to the high-pressure pipe 30. In the first embodiment, the hydraulic pump 34 is a reciprocation type pump having two or more pistons that are reciprocated by the motor 32, and the accumulator 50 stores the pressure energy of brake fluid by converting it into the pressure energy of charge gas, such as nitrogen.

The accumulator 50 stores the brake fluid that has been pressurized up to, for example, 14 to 22Mpa by the hydraulic pump 34. The outlet of the relief valve 53 is connected to the hydraulic pipe 28. The relief valve 53 opens in response to the pressure of brake fluid increasing to an abnormal level, for example, to about 25MPa, so that the high-pressure brake fluid returns to the hydraulic pipe 28. An accumulator sensor 51 is provided in the high-pressure pipe 30, which detects the discharge pressure of the accumulator 50, that is, the pressure of brake fluid within the accumulator 50. While the accumulator 50, the hydraulic pump 34, etc. are incorporated in the ECB actuator 80 in the first embodiment, the accumulator 50, the hydraulic pump 34, and devices or parts accompanying them may be provided separately from the ECB actuator 80.

The high-pressure pipe 30 is connected to the wheel cylinder 20FR for the front-right wheel via a pressure-increase valve 40FR, to the wheel cylinder 20FL for the front-left wheel via a pressure-increase valve 40FL, to the wheel cylinder 20RR for the rear-right wheel via a pressure-increase valve 40RR, and to the wheel cylinder 20RL for the rear-left wheel via a pressure-increase valve 40RL. Hereinafter, the pressure-increase valves 40FR to 40RL will be collectively referred to as "pressure-increase valves 40" where appropriate. The pressure-increase valves 40 are electromagnetically driven flow rate control valves (linear valves) that are normally closed. That is, the pressure-increase valves 40 are closed when not energized, and are operated to increase the pressures supplied to the respective wheel cylinders 20 as needed.

The wheel cylinder 20FR for the front-right wheel and the wheel cylinder 20FL for the front-left wheel are connected to the hydraulic pipe 28 via a pressure-reduction valve 42FR and a pressure-reduction valve 42FL, respectively. The pressure-reduction valves 42FR and 42FL are electromagnetically-driven flow rate control valves (linear valves) that are normally closed and operated to reduce the pressures supplied to the wheel cylinders 20FR and 20FL as needed. On the other hand, the wheel cylinder 20RR for the rear-right wheel and the wheel cylinder 20RL for the rear-left wheel are connected to the hydraulic pipe 28 via a pressure-reduction valve 42RR and a pressure-reduction valve 42RL, respectively. The pressure-reduction valves 42RR and 42RL are also electromagnetically driven flow rate control valves (linear valves) that are normally closed and operated to reduce the pressures supplied to the wheel cylinders 20RR and 20RL as needed. Hereinafter, the pressure-reduction valve valves 42FR to 42RL will be collectively referred to as "pressure-reduction valve valves 42" where appropriate.

Wheel cylinder pressure sensors 44FR, 44FL, 44RR, and 44RL are provided near the wheel cylinders 20FR, 20FL, 20RR, and 20RL, respectively. The wheel cylinder pressure sensors 44FR to 44RL detect the wheel cylinder pressures that are the pressures supplied to the respective wheel cylinders 20. Hereinafter, the wheel cylinder pressure sensors 44FR to 44RL will be collectively referred to as "wheel cylinder pressure sensors 44" where appropriate.

Thus, the ECB actuator 80 of the brake system 10 is constituted by the right master cut valve 27FR, the left master cut valve 27FL, the pressure-increase valves 40FR to 40RL, the pressure-reduction valve valves 42FR to 42RL, the hydraulic pump 34, the accumulator 50, and so on. An ECU (Electronic Control Unit) 200, which is a controller in the first embodiment, controls the ECB actuator 80. The ECU 200 includes a CPU (Central Processing Unit) that executes various computations and calculations, a ROM that stores various control programs, a RAM that is used as a work area for storing data and executing programs, input/output interfaces, memories, etc.

In the brake control system 10 configured as described above, the ECU 200 calculates the target speed of the vehicle based on the travel of the brake pedal 12 being depressed by the driver of the vehicle and the master cylinder pressure, and the ECU 200 then determines the target wheel cylinder pressure for each wheel in accordance with the calculated target speed of the vehicle. Then, the ECU 200 controls the pressure-increase valves 40 and the pressure-reduction valves 42 such that the wheel cylinder pressure for each wheel equals the target wheel cylinder pressure.

During this time, the right master cut valve 27FR and the left master cut valve 27FL are kept closed, and therefore the brake fluid that is discharged from the master cylinder 14, due to the depression of the brake pedal 12, flows into the stroke simulator 24.

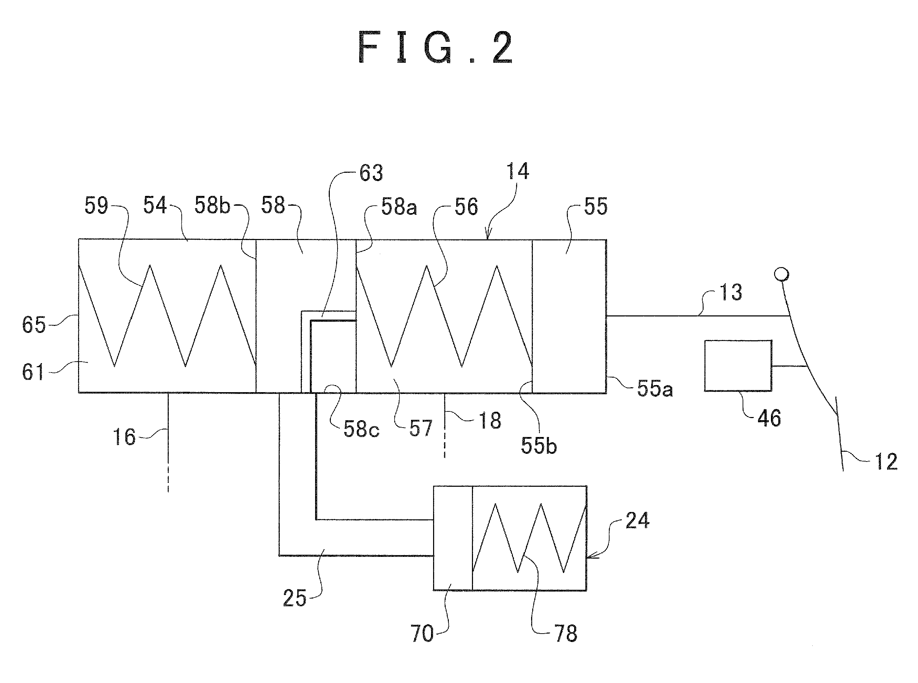

FIG. 2 is a view schematically showing a cross section of the master cylinder 14 in the first embodiment. Hereinafter, the side of the master cylinder 14 that is closer to the brake pedal 12 will be referred to as "the front side", and the other side of the master cylinder 14 will be referred to as "the rear side" for convenience of description. A first master piston 55 and a second master piston 58 are provided in a master housing 54 of the master cylinder 14. The first master piston 55 is disposed ahead of the second master piston 58. That is, the first master piston 55 is closer to the brake pedal 12 than the second master piston 58 is. The internal diameter of the master housing 54 is slightly greater than the external diameters of the first master piston 55 and the second master piston 58, so that the first master piston 55 and the second master piston 58 can slide on the internal surface of the master housing 54. In the master housing 54, the first master piston 55 and the second master piston 58 are arranged in series in the direction in which the first master piston 55 and the second master piston 58 slide and are spaced apart from each other.

A first master cylinder chamber 57 is formed in the rear of the first master piston 55. The first master cylinder chamber 57 is defined by a rear-end portion 55b of the first master piston 55, a front-end portion 58a of the second master piston 58, and the internal surface of the master housing 54. On the other hand, a second master cylinder chamber 61 is formed in the rear of the second master piston 58. The second master cylinder chamber 61 is defined by a rear-end portion 58b of the second master piston 58, the internal surface of the master housing 54, and a rear-end portion 65 of the master housing 54.

The brake pedal 12 is linked to a front-end face 55a of the first master piston 55 via the input rod 13. A spring for transferring load may be provided at an intermediate portion of the input rod 13.

A first master spring 56 (an example of the first elastic member) is provided between the first master piston 55 and the second master piston 58 (an example of the second elastic member), which are arranged in series within the master housing 54, and a second maser spring 59 is provided between the second master piston 58 and the rear-end portion 65 of the master housing 54. Specifically, the first master spring 56 connects the rear-end portion 55b of the first master piston 55 and the front-end portion 58a of the second master piston 58 and the second master spring 59 connects the rear-end portion 58b of the second master piston 58 and the rear-end portion 65 of the master housing 54. That is, the first master spring 56 is disposed within the first master cylinder chamber 57, and the second master spring 59 is disposed within the second master cylinder chamber 61. As such, the second master piston 58 is linked to the brake pedal 12 via the first master spring 56 and the first master piston 55.

The first master piston 55 is imeplled by the first master spring 56 towards the initial position of the first master piston 55 on the front side, that is, so as to increase the capacity of the first master cylinder chamber 57. On the other hand, the second master piston 58 is impelled by the second master spring 59 towards the initial position of the second master piston 58 on the front side, that is, so as to increase the capacity of the second master cylinder chamber 61. The initial position of each of the first master piston 55 and the second master piston 58 is the position at which each piston is retained when the brake pedal 12 is not operated. The initial position of each piston is determined by design.

Each of the first master spring 56 and the second master spring 59 is arranged in position under a predetermined compression load, which is the mounting load of the spring, such that each piston is impelled by a predetermined level of imepelling force when the piston is at the initial position. Thus, when a load that is greater than the mounting load of the spring is applied to the spring in response to the depression of the brake pedal 12 with force that exceeds a threshold level, the spring elastically deforms and the piston moves. On the other hand, when the brake pedal 12 is operated with a force less than the threshold level and thus a load that is less than the mounting load is applied to the spring, the piston remains at the initial position.

In the first embodiment, the mounting load of the second master spring 59 is larger than the mounting load of the first master spring 56. Therefore, when the brake pedal 12 is operated with a force exceeding the threshold level, the first master spring 56, which has the smaller mounting load, elastically deforms first. That is, at this time, only the first master piston 55 slides. Then, in response to the operation load applied from the driver exceeding the mounting load of the second master spring 59, the first master spring 56 and the second master spring 59 both elastically deform, and the second master piston 58 begins to slide. Meanwhile, in order to maintain the mounting load of each spring, a stopper, such as a stopper bolt, is provided to prevent the second master piston 58 from moving towards the first master piston 55 beyond its initial position.

A hydraulic brake pressure control pipe 18 that supplies brake fluid to the wheel cylinder 20FL for the front-left wheel is connected to the first master cylinder chamber 57, and a hydraulic brake pressure control pipe 16 that supplies brake fluid to the wheel cylinder 20FR for the front-right wheel is connected to the second master cylinder chamber 61. When the ECU 200 determines, in response to detecting an operation input to the brake pedal 12, that braking is being required, the ECU 200 closes the right master cut valve 27FR and the left master cut valve 27FL, so that the first master cylinder chamber 57 and the second master cylinder chamber 61 are disconnected from the wheel cylinders 20.

The first master cylinder chamber 57 and the second master cylinder chamber 61 are also connected to the reservoir tank 26. When the first master piston 55 and the second master piston 58 slightly move in response to the brake pedal 12 being operated by the driver, the connection between the first master cylinder chamber 57 and the reservoir tank 26 and the connection between the second master cylinder chamber 61 and the reservoir tank 26 are mechanically interrupted.

An in-piston passage 63 is formed in the second master piston 58. The in-piston passage 63 is a through-hole extending between the front-end portion 58a of the second master piston 58 and the side face 58c of the second master piston 58. More specifically, the in-piston passage 63 extends, within the second master piston 58, from the front-end portion 58a of the second master piston 58 towards the rear side and bends at the right angle at the center of the second master piston 58 and then extends down to the side face 58c of the second master piston 58.

As shown in FIG. 2, the second master piston 58 is arranged such that the end of the in-piston passage 63 at the side face 53c of the second mister piston 58 communicates with the interior of the simulator pipe 25 when the second master piston 58 is at the initial position thereof. The end of the in-piston passage 63 at the front-end portion 58a of the second mister piston 58 communicates with the first master cylinder chamber 57. Therefore, in an initial state when the brake pedal 12 is not operated, the brake fluid is able to flow between the first master cylinder chamber 57 and the stroke simulator 24. That is, the brake fluid flows from the first master cylinder chamber 57 to the stroke simulator 24 through the in-piston passage 63 and the simulator pipe 25.

In normal brake control, when the ECU 200 determines that braking is required in response to detecting an operation input to the brake pedal 12, the ECU 200 closes the right master cut valve 22FR and the left master cut valve 22FL. As a result, the first master cylinder chamber 57 is disconnected from the wheel cylinder 20FL, so that brake fluid is allowed to flow only between the first master cylinder chamber 57 and the stroke simulator 24. Because the second master cylinder chamber 61 is hydraulically isolated at this time, the second master piston 58 is virtually unable to move in response to the operation of the brake pedal 12, due to the fluid pressure in the second master cylinder chamber 61. As such, the communication between the in-piston passage 63 and the simulator pipe 25 is maintained, and the brake fluid in the first master cylinder chamber 57 is pressurized and discharged to the stroke simulator 24 as the brake pedal 12 is depressed.

On the other hand, when the right master cut valve 27FR is open during an emergency operation that is activated in response to occurrence of a certain abnormality, the second master cylinder chamber 61 is not hydraulically isolated. In this case, therefore, as the brake pedal 12 is depressed, the second master piston 58 slides towards the rear-end portion 65 of the master housing 54 and the brake fluid is discharged to the wheel cylinder 20FR from the second master cylinder chamber 61. As the second master piston 58 slides, the end of the in-piston passage 63 at the side face 58c of the second master piston 58 moves away from the position communicating with the interior of the simulator pipe 25. Thus, the communication between the in-piston passage 63 and the simulator pipe 25 is interrupted, whereby the stroke simulator 24 is disconnected from the master cylinder 14. When the brake pedal 12 is released, the second master piston 58 returns to the initial position as impelled by the second master spring 59, and the in-piston passage 63 and the simulator pipe 25 are again placed in communication.

As such, the second master piston 58, the in-piston passage 63, the simulator pipe 25, etc. constitute the stroke simulator disconnecting mechanism in the first embodiment. That is, the stroke simulator disconnecting mechanism is provided on the hydraulic passage between the master cylinder 14 and the stroke simulator 24. If the brake fluid is allowed to flow from the master cylinder 14 to the wheel cylinders 20, the stroke simulator disconnecting mechanism mechanically closes the hydraulic passage between the master cylinder 14 and the stroke simulator 24 and thereby interrupts the flow of hydraulic fluid through the same passage, in response to the operation of the brake pedal 12. In the stroke simulator disconnecting mechanism, the second master piston 58 is caused to slide to close the hydraulic passage between the master cylinder 14 and the stroke simulator 24. On the other hand, if the flow of brake fluid from the master cylinder 14 to the wheel cylinders 20 is interrupted, the stroke simulator disconnecting mechanism maintains the connection between the master cylinder 14 and the stroke simulator 24, so that the brake fluid can flow from the master cylinder 14 to the stroke simulator 24.

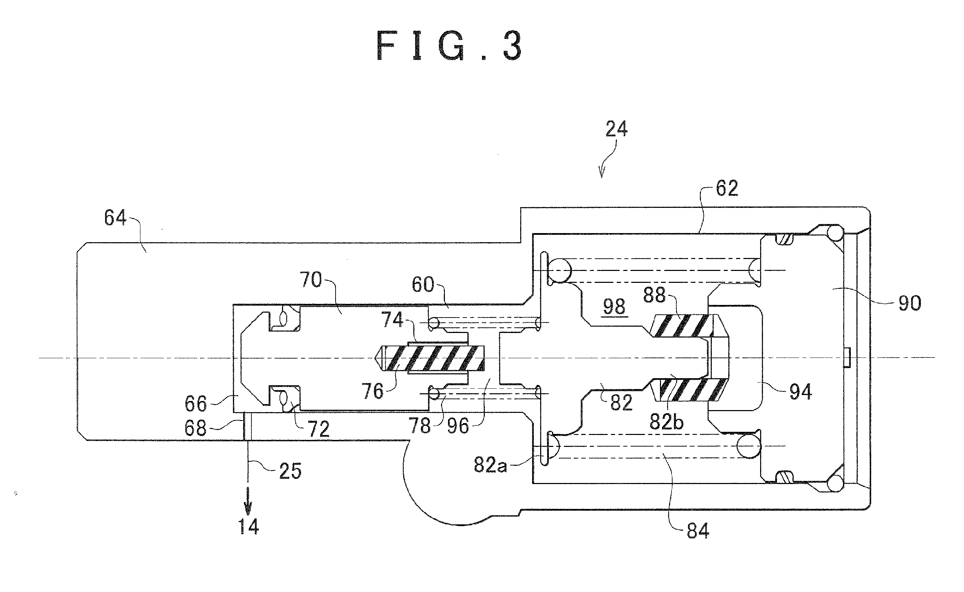

FIG. 3 is a view schematically showing a cross section of the stroke simulator 24. The stroke simulator 24 includes a first simulator piston 70 and a second simulator piston 82 that are arranged in a simulator housing 64. Formed within the simulator housing 64 are a first cylinder 60 that is slightly larger in diameter than the first simulator piston 70 and a second cylinder 62 that is larger in diameter than the first cylinder 60. The first cylinder 60 and the second cylinder 62 are formed in series and are coaxial with each other. The first simulator piston 70 is arranged in the first cylinder 60 and the second simulator piston 82 is arranged in the second cylinder 62.

A simulator fluid chamber 66 into which brake fluid of an amount corresponding to the operation amount of the brake pedal 12 is supplied from the master cylinder 14 is defined on the left side of the first simulator piston 70, as viewed in FIG. 3. The simulator fluid chamber 66 is connected to the master cylinder 14 via a simulator passage 68, which is formed in the wall of the simulator housing 64, and the simulator pipe 25. The first simulator piston 70 slides within the first cylinder 60 in response to the pressure of brake fluid in the simulator fluid chamber 66. The second simulator piston 82 moves in the second cylinder 62.

Air chambers 96, 98 are defined on the side of the simulator fluid chamber 66 opposite where the simulator fluid chamber 66 is located. The first simulator piston 70 has a generally cylindrical shape and a simulator cup 72, which is ring-shaped, is attached to an annular groove formed in the surface of the first simulator piston 70. The simulator cup 72 prevents brake fluid from flowing into the air chambers 96, 98. The air chambers 96, 98 communicate with the ambient air through communication holes, which are not shown in the drawings.

A first simulator spring 78 is provided between the first simulator piston 70 and the second simulator piston 82 as an elastic member that impels the first simulator piston 70 and the second simulator piston 82. The first simulator spring 78 is slightly compressed so as to have a predetermined mounting load. A hole 74 is formed at the end of the first simulator piston 70 on the side opposite where the simulator fluid chamber 66 is located, so as to extend in the axial direction. A rubber plug 76 that is cylindrical is inserted into the hole 74 such that one end of the rubber plug 76 slightly sticks out from the hole 74.

The second simulator piston 82 includes a flange 82a and a convex portion 82b. The flange 82a extends outward from the axis of the second cylinder 62. The external diameter of the flange 82a is slighter smaller than the internal diameter of the second cylinder 62. Due to the flange 82a, the second simulator piston 82 does not move beyond a predetermined point towards the left side.

A simulator base 90 is provided at the right end in the second cylinder 62. A second simulator spring 84 is provided between the simulator base 90 and the second simulator piston 82 as an elastic member that impels the second simulator piston 82. The second simulator spring 84 is slightly compressed so as to have a predetermined mounting load. The mounting load of the second simulator spring 84 is set greater than the mounting load of the first simulator spring 78.

The convex portion 82b extends towards the side opposite where the first simulator piston 70 is located (the right side in FIG. 3). A rubber cap 88 is attached onto the top of the convex portion 82b. As the second simulator piston 82 moves to the right side, the rubber cap 88 fits into a rubber-receiving portion 94 that is formed in the simulator base 90.

Hereinafter, the operation of the stroke simulator 24 will be described in detail. When the brake pedal 12 is operated when the right master cut valve 27FR and the left master cut valve 27FL are both closed, brake fluid is supplied from the master cylinder 14 to the simulator fluid chamber 66 via the simulator pipe 25 and the simulator passage 68. Then, the first simulator piston 70 moves towards the right side against the impelling force of the first simulator spring 78 and the sliding resistance between the simulator cup 72 and the internal wall of the first cylinder 60. At this time, because the mounting load of the second simulator spring 84 is greater than the mounting load of the first simulator spring 78 as described above, the first simulator spring 78 elastically deforms before the second simulator spring 84 does.

As the first simulator piston 70 moves to the right side, the end of the rubber plug 76 contacts the left end of the second simulator piston 82. From this moment, the elastic force of the rubber plug 76 additionally acts on the first simulator piston 70. As brake fluid is further supplied to the simulator fluid chamber 66 and the first simulator piston 70 further moves towards the right side, the rubber plug 76 is compressed into the hole 74 of the first simulator piston 70, whereby the first simulator piston 70 contacts the second simulator piston 82. From this moment, the first simulator piston 70 and the second simulator piston 82 start moving together and the elastic force of the second simulator spring 84 additionally acts on the first simulator piston 70 and the second simulator piston 82.

As the first simulator piston 70 and the second simulator piston 82 further move towards the right side, the rubber cap 88 attached to the convex portion 82b of the second simulator piston 82 contacts the rubber-receiving portion 94. From this moment, the elastic force of the rubber cap 88 additionally acts on the first simulator piston 70 and the second simulator piston 82.

In this way, in the stroke simulator 24, the spring characteristic (i.e., reactive force) changes in four stages as the first simulator piston 70 moves towards the right side. By appropriately setting the spring coefficients of the first simulator spring 78 and the second simulator spring 84, the reaction coefficients of the rubber plug 76 and the rubber cap 88, the sliding resistance of the simulator cup 72, and so on, the brake feeling can be adjusted so as to change according to the operation amount of the brake pedal 12 such that the reactive force is small when the brake pedal 12 is initially depressed and increases as the the brake pedal 12 is depressed further.

When the brake pedal 12 is released, the brake fluid is discharged from the simulator fluid chamber 66 through the simulator passage 68 and the simulator pipe 25, and the first simulator piston 70 and the second simulator piston 82 are then pushed towards the left side of FIG. 3 by the elastic forces of the rubber cap 88, the second simulator spring 84, the rubber plug 76, and the first simulator spring 78. At this time, the first simulator piston 70 slides towards the left side in the first cylinder 60

As described above, during normal brake control, brake fluid is supplied to the wheel cylinders 20 from the accumulator 50 via the pressure-increase valves 40 under the control of the ECU 200 while the flow of brake fluid between the master cylinder 14 and the wheel cylinders 20 is interrupted. The brake fluid that has been discharged from the master cylinder 14 in response to the operation of the brake pedal 12 is supplied to the stroke simulator 24, and the stroke simulator 24 in turn produces reactive forces in accordance with the manner in which the brake pedal 12 is operated. Meanwhile, when it is necessary to supply brake fluid to the wheel cylinders 20 from the master cylinder 14, such as upon occurrence of a certain abnormality, the ECU 200 stops the normal brake control and the stroke simulator disconnecting mechanism mechanically disconnects the stroke simulator 24 from the master cylinder 14.

However, in reality, there is a possibility that a certain amount of brake fluid flows from the first master cylinder chamber 57 of the master cylinder 14 to the stroke simulator 24 during the time period from when the stroke simulator disconnecting mechanism starts disconnecting the stroke simulator 24 to when the disconnection is completed. That is, in the stroke simulator disconnecting mechanism, as describe above, the connection between the in-piston passage 63 and the simulator pipe 25 is mechanically interrupted as the second master piston 58 slides away. Therefore, the brake fluid can flow from the master cylinder 14 to the stroke simulator 24 until the second master piston 58 slides to a certain point to completely cut off the connection between the in-piston passage 63 and the simulator pipe 25, and the brake fluid that has thus flown to the stroke simulator 24 does not contribute to generation of braking force. Also, the amount of brake fluid to be supplied to the wheel cylinders 20 decreases by the amount of the brake fluid that has flowed to the stroke simulator 24 (In the configuration of the first embodiment, the amount of brake fluid to be supplied to the wheel cylinder 20 for the front-right wheel decreases). To counter this, it is necessary to minimize the amount of brake fluid that flows to the stroke simulator 24 before the connection between the in-piston passage 63 and the simulator pipe 25 is completely cut off.

In view of the above, the stroke simulator disconnecting mechanism of the first embodiment is arranged such that the disconnecting operation starts before the brake fluid begins to flow from the master cylinder 14 to the stroke simulator 24. More specifically, the second master piston 58 is arranged to start sliding before the piston in the stroke simulator 24 starts moving when the master cut valves 27 are opened.

In the first embodiment, the load at which the pistons in the stroke simulator 24 start moving is set larger than the load at which the second master piston 58 starts moving. Thus, the mounting load of the spring in the stroke simulator 24 is set larger than the mounting load of the second master spring 59. That is, the mounting load of the first simulator spring 78 that is the first to elastically deform in the stroke simulator 24 is set larger than the mounting load of the second master spring 59. In the first embodiment, because the mounting load of the second master spring 59 is set larger than the mounting load of the first master spring 56 as described above, the relationship among the mounting loads of the springs is: the first master spring 56 < the second master spring 59 < the first simulator spring 78.

The load at which each piston starts moving, that is, the load needed to cause the piston to start sliding is equal to the sum of the mounting load of the spring that impels the piston and the frictional resistance that is present when the piston starts sliding. In the case where the sliding resistance of the piston is estimated to be relatively large, the mounting load of the spring may be set in consideration of the sliding resistance of the piston. For example, the load at which the piston in the stroke simulator 24 starts moving may be set larger than the sum of the mounting load of the second master spring 59 and the sliding resistance of the second master piston 58. In other words, the sum of the mounting load of the spring in the stroke simulator 24 and the sliding resistance of the piston in the stroke simulator 24 may be set larger than the sum of the mounting load of the second master spring 59 and the sliding resistance of the second master piston 58.

Further, if the stroke simulator 24 includes two or more springs arranged in series, the mounting load of each of the springs may be set larger than the mounting load of the second master spring 59. In the configuration described above, the mounting load of the first simulator spring 78, which is the first to elastically deform in the stroke simulator 24 during operation of the stroke simulator 24, may be set larger than the mounting load of the second master spring 59.

Hereinafter, the disconnecting operation of the stroke simulator disconnecting mechanism will be described. To begin with, it is to be noted that, as the operation amount of the brake pedal 12 increases, the first master spring 56, the second master spring 59, and the first simulator spring 78 start deforming elastically in this order due to the differences in the magnitude of mounting load among them. In the following descriptions, the sliding resistances of the respective pistons are assumed to be very small and therefore they are not taken into consideration.

First, when the load applied to the first master spring 56 exceeds the mounting load of the first master spring 56 in response to the operation of the brake pedal 12, the first master spring 56 starts deforming elastically and the first master piston 55 starts sliding. Thus, the brake fluid in the first master cylinder chamber 57 is pressurized by the first master piston 55 and discharged to the wheel cylinder 20FL via the brake hydraulic pressure control pipe 18. At this time, the load acting on the second master spring 59 is smaller than the mounting load of the second master spring 59 and the load acting on the first simulator spring 78 is smaller than the mounting load of the first simulator spring 78, and therefore the second master spring 59 and the first simulator spring 78 do not elastically deform, that is, the second master piston 58 and the first simulator piston 70 are stationary at this moment.

When the load acting on the second master spring 59 exceeds the mounting load of the second master spring 59 in response to further depression of the brake pedal 12, the second master spring 59 starts deforming elastically and the second master spring 59 starts sliding. From this moment, the brake fluid in the second master cylinder chamber 61 is pressurized and thereby discharged to the wheel cylinder 20FR via the brake hydraulic pressure control pipe 16. Because the mounting load of the first simulator spring 78 is larger than the mounting load of the second master spring 59, the first simulator spring 78 does not yet deform elastically at this time.

In the first embodiment, the disconnecting operation of the stroke simulator disconnecting mechanism starts when the second master piston 58 begins to slide. The second master piston 58 slides towards the rear-end portion 65 of the master housing 54 as the brake pedal 12 is depressed further, and when the end of the in-piston passage 63 at the side face 58c of the second master piston 58 moves away from the position communicating with the interior of the simulator pipe 25, the flow of brake fluid from the in-piston passage 63 to the simulator pipe 25 is interrupted, whereby the stroke simulator 24 is disconnected from the master cylinder 14, which is the end of the disconnecting operation of the stroke simulator disconnecting mechanism.

As such, in the first embodiment, because the disconnecting operation of the stroke simulator disconnecting mechanism is completed before the load acting on the first simulator spring 78 exceeds the mounting load of the first simulator spring 78, the first simulator piston 70 remains stationary and thus no brake fluid flows to the stroke simulator 24 during the disconnecting operation of the stroke simulator disconnecting mechanism. Also, even if the load acting on the first simulator spring 78 reaches the mounting load of the first simulator spring 78 before the disconnecting operation of the stroke simulator disconnecting mechanism is completed, because the stroke simulator disconnecting mechanism of the first embodiment starts the disconnecting operation before brake fluid starts flowing to the stroke simulator 24, the amount of brake fluid that flows to the stroke simulator 24 during the disconnecting operation of the stroke simulator disconnecting mechanism can be minimized.

The mounting load of the spring in the stroke simulator 24 may be adjusted appropriately in consideration of the allowable amount of brake fluid to be discharged to the stroke simulator 24 during the disconnecting operation of the stroke simulator disconnecting mechanism, the brake feeling that should be realized by the stroke simulator 24, and so on. Also, the mounting load of each spring may be adjusted in consideration of the difference between the cross-sectional area of the master cylinder 14 and the cross-sectional area of the stroke simulator 24. If the cross-sectional area of the stroke simulator 24 is smaller than the cross-sectional area of the master cylinder 14, the load at which the piston in the stroke simulator 24 starts moving, if appropriate, may be set smaller than the load at which the second master piston 58 starts moving.

As such, in the first embodiment, the stroke simulator disconnecting mechanism is configured such that, when brake fluid starts to be supplied from the master cylinder 14, the second master piston 58 starts sliding before the first simulator piston 70, etc. start moving, in other words, the disconnecting operation of the stroke simulator disconnecting mechanism starts before the stroke simulator 24 starts operating. Thus, the amount of brake fluid supplied from the master cylinder 14 to the wheel cylinders 20 increases and the efficiency of use of brake fluid in the wheel cylinders 20 improves accordingly.

Hereinafter, the second embodiment of the invention will be described with reference to the accompanying drawings. In the first embodiment, the mounting loads of the first master spring 56, the second master spring 59, and the first simulator spring 78 are set such that: the first master spring 56 < the second master spring 59 < the first simulator spring 78. On the other hand, in the second embodiment, the mounting loads of the first master spring 56, the second master spring 59, and the first simulator spring 78 are set such that: the second master spring 59 < the first master spring 56 < the first simulator spring 78. That is, the mounting load of the second master spring 59 is set smaller than the mounting load of the first master spring 56. Namely, the stroke simulator disconnecting mechanism of the first embodiment is mainly intended to increase the mounting load of the spring in the stroke simulator 24 while using a normal master cylinder as the master cylinder 14, and on the other hand, the stroke simulator disconnecting mechanism of the second embodiment is mainly intended to reduce the mounting load of the second master spring 59 while using a normal stroke simulator as the stroke simulator 24. In the following, descriptions regarding the components and processes that are the same as those in the first embodiment will be omitted if appropriate.

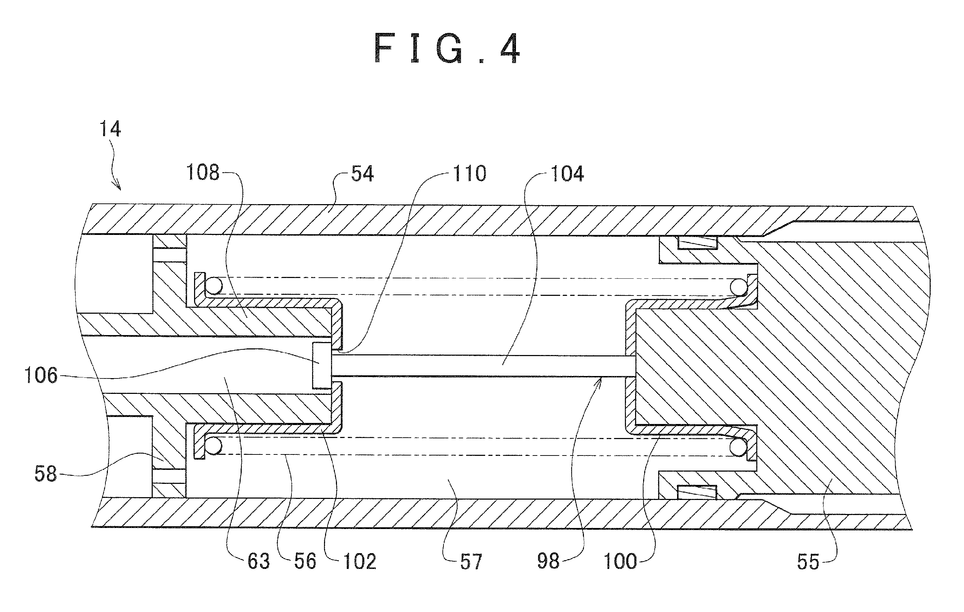

In the second embodiment, the master cylinder 14 has an interconnected-spring structure in which the mounting load of the second master spring 59 is set smaller than the mounting load of the first maser spring 56. FIG. 4 is a cross-sectional view showing the main portions of the master cylinder 14 in the second embodiment.

Referring to FIG. 4, the master cylinder 14 includes a linking member 98 that connects the first master piston 55 and the second master piston 58. The linking member 98 defines the interval between the first master piston 55 and the second master piston 58 in the initial state when the brake pedal 12 is not operated. FIG. 4 shows the initial state. The interval between the first master piston 55 and the second master piston 58 in the initial state will hereinafter be referred to as the "initial interval" where appropriate. The linking member 98 connects the first master piston 55 and the second master piston 58 such that the first master piston 55 and the second master piston 58 can move toward each other but can not move away from each other beyond the initial interval.

The linking member 98 includes a first spring support 100, a second spring support 102, and a link rod 104. The first spring support 100 has a hat-like shape, and the portion of the first spring support 100 corresponding to the brim of a hat is fixed to the first master piston 55, and the portion of the first spring support 100 corresponding to the crown of a hat is located further to the inner side of the first master cylinder chamber 57. The first spring support 100 and the master cylinder 14 are arranged to be substantially coaxial with each other.

The second spring support 102 also has a hat-like shape and is substantially the same size as the first spring support 100. The second spring support 102 is fixed to a projection 108 formed at the front-end of the second master piston 58, so as to face the first spring support 100 across the first master cylinder chamber 57. An in-piston passage 63 is formed in the projection 108.

One end of the first master spring 56 is fixed to the portion of the first spring support 100 that corresponds to the brim of a hat, and the other end of the first master spring 56 is fixed to the portion of the second spring support 102 that corresponds to the brim of a hat. The portion of the first spring support 100 that corresponds to the crown of a hat and the portion of the second spring support 102 that corresponds to the crown of a hat are both inserted into the first master spring 56. The first master spring 56 is fixed at one end to the first spring support 100 and at the other end to the second spring support 102 in a compressed state so as to have a predetermined mounting load.

The link rod 104 is coaxially arranged in the first master spring 56. One end of the link rod 104 is fixed to the portion of the first spring support 100 that corresponds to the crown of a hat. The link rod 104 extends straight from the first spring support 100 along the axis of the master cylinder 14 and is freely fit into a hole 110 formed in the second spring support 102. The hole 110 is formed at the portion of the second spring support 102 that corresponds to the crown of a hat. An end portion 106 of the link rod 104 that is provided on the second master piston 58 side has a diameter larger than the diameter of the hole 110, such that the end portion 106 of the link rod 104 is caught at the hole 110 of the second spring support 102.

The force of the first master spring 56 is applied to the first master piston 55 and the second master piston 58 so that the first master piston 55 and the second master piston 58 move away from each other in an initial state. However, because the link rod causes to stop the first master piston 55 and the second master piston 58 stop to move away form each other and the predetermined mounting load of the first master spring 56 is thereafter maintained. Thus, the first master piston 55 and the second master piston 58 cannot move away from each other beyond the initial interval. The linking member 98 is arranged such that the mounting load of the first master spring 56 is obtained when the interval between the first master piston 55 and the second master piston 58 is equal to the initial interval.

When the load acting on the first master piston 55 exceeds the mounting load of the first master spring 56 as the brake pedal 12 is depressed, the first master spring 56 starts to be compressed. At this time, the first master piston 55 starts sliding and the link rod 104 starts to be inserted into the in-piston passage 63 of the second master piston 58. In the second embodiment, the in-piston passage 63 accommodates the link rod 104 when the first master piston 55 is sliding. As the first master piston 55 slides, the brake fluid flows into the in-piston passage 63 via the hole 110 and then to the stroke simulator 24.

As described above, in the second embodiment, the mounting load of the first master spring 56 is maintained by the linking member 98, and therefore the mounting load of the first master spring 56 and the mounting load of the second master spring 59 can be made different from each other. In general, even if an interconnected-spring structure is employed, the mounting load of the second master spring 59 is set larger than the mounting load of the first master spring 56. In the second embodiment, however, the mounting load of the second master spring 59 is set smaller than the mounting load of the first master spring 56, taking advantage of the freedom in setting the mounting loads of the respective springs. Thus, in the second embodiment, the mounting loads of the first master spring 56, the second master spring 59, and the first simulator spring 78 are set such that: the second master spring 59 < the first master spring 56 < the first simulator spring 78.

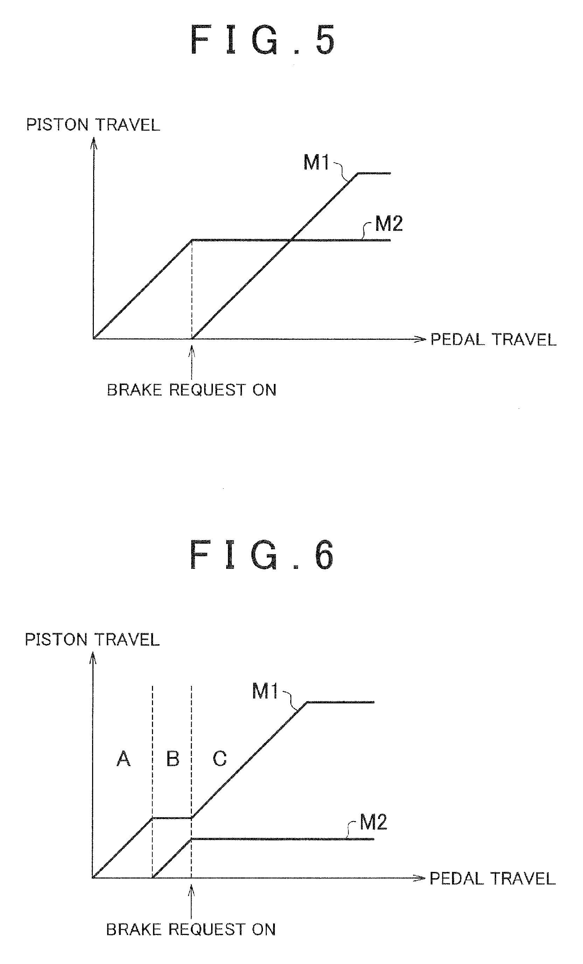

FIG. 5 is a graph that schematically illustrates the relation between the travel of the first master piston 55 and the travel of the brake pedal 12 and the relation between the travel of the second master piston 58 and the travel of the brake pedal 12 in the second embodiment. Note that these relations are established during normal brake control. In FIG. 5, the ordinate of the graph represents the piston travel and the abscissa represents the pedal travel, and the curve denoted by "M1" represents the relation between the travel of the first master piston 55 and the travel of the brake pedal 12, and the curve denoted by "M2" represents the relation between the travel of the second master piston 58 and the travel of the brake pedal 12. In FIG. 5, the travel of the second master piston 58 represents the amount of movement of the second master piston 58 and the travel of the first master piston 55 represents the amount of movement of the first master piston 55 relative to the second master piston 58.

Referring to FIG. 5, during an initial state where the travel of the brake pedal 12 is so small that a brake request is not recognized (brake request: OFF), the travel of the second master piston 58 increases as the travel of the brake pedal 12 increases while the travel of the first master piston 55 remains almost zero. That is, the interval between the first master piston 55 and the second master piston 58 remains substantially unchanged while the second master piston 58 moves as the travel of the brake pedal 12 increases. This is because, in the second embodiment, the mounting load of the first master spring 56 is set larger than the mounting load of the second master spring 59.

After the travel of the brake pedal 12 reaches a point where a brake request is not recognized (brake request: ON), the master cut valves 27 are closed and thereby the second master cylinder chamber is hydraulically isolated. Therefore, at this time, the travel of the second master piston 58 stops increasing even though the travel of the brake pedal 12 continues to increase, after which the second master piston 58 remains substantially unchanged. After the brake request is recognized, the first master piston 55 moves as the travel of the brake pedal 12 increases, instead of the second master piston 58.

As described above, in the second embodiment, the master cylinder 14 has an interconnected-spring structure, and the mounting load of the second master spring 59 is set smaller than the mounting load of the first master spring 56, that is, the mounting loads of the second master spring 59, the first master spring 56, and the first simulator spring 78 are set such that: the second master spring 59 < the first master spring 56 < the first simulator spring 78. As such, according to the second embodiment, it is possible to set the mounting load of the spring in the stroke simulator 24 to be relatively small and thus increase the freedom in designing the stroke simulator 24 to reduce the influences on the brake feeling.

Meanwhile, during normal brake control by the ECU 200, the ECU 200 determines, mainly in response to detecting that the brake pedal 12 is being operated, that a brake request is being made and closes the master cut valves 27 to control the brakes. That is, the master cut valves 27 are kept open until the operation of the brake pedal 12 is detected, and therefore the second master piston 58 can slide for a while immediately after the brake pedal 12 is initially depressed. To counter this, the overlapping margin between the simulator pipe 25 and the in-piston passage 63 may be made large enough to prevent the stroke simulator 24 from being disconnected as the second master piston 58 slides during the time period from when the brake pedal 12 is initially depresed to when the ECU 200 detects the operation of the brake pedal 12. For example, the pipe diameter of the potion of the simulator pipe 25 at the connecting point with the master cylinder 14 may be made larger than the distance by which the in-piston passage 63 is estimated to slide before the ECU 200 detects that the the brake pedal 12 is being operated. With this arrangement, the stroke simulator 24 is prevented from being disconnected before the ECU 200 detects the operation of the brake pedal 12, which is especially desirable in a structure where the mounting load of the second master spring 59 is set relatively small so that the second master piston 58 can easily move in response to the operation of the brake pedal 12.

Hereinafter, the third embodiment of the invention will be described, which is a modified version of the second embodiment described above. Specifically, the third embodiment differs from the second embodiment in that the characteristics of the first master spring 56 and the second master spring 59 are different. In the third embodiment, the mounting load of the first master spring 56 is set smaller than the mounting load of the second master spring 59 and the spring constant of the first master spring 56 is set larger than the spring constant of the second master spring 59. Setting the mounting loads and the spring constants as indicated above reduces the distance that the second master piston 58 travels before a brake request is recognized (brake request: ON), which provides an advantage that the required endurance of seal members for the second master piston 58 can be reduced.

FIG. 6 is a graph that schematically illustrates the relation between the travel of the brake pedal 12 and the travel of each piston. Note that the relations shown in FIG. 6 are established during a normal brake control.

The region denoted by "A" in the graph represents an initial state where the travel of the brake pedal 12 is still so small that no brake request is recognized. In the third embodiment, during the initial state, the travel of the first master piston 55 increases as the travel of the brake pedal 12 increases while the travel of the second master piston 58 remains almost zero. This because, in the third embodiment, the mounting load of the first master spring 56 is set smaller than the mounting load of the second master spring 59, in contrast with the second embodiment. When the travel of the brake pedal 12 reaches a point where the load acting on the second master spring 59 equals the mounting load of the second master spring 59, the operation region shifts from region A to region B.

In region B, the travel of the second master piston 58 increases as the travel of the brake pedal 12 increases, while the travel of the first master piston 55 remains unchanged despite the increase of the travel of the brake pedal 12. In region B, the load acting on the first master spring 56 and the second master spring 59 is larger than the mounting load of the second master spring 59, and therefore the first master spring 56 and the second master spring 59 are both elastically deformable. However, because the spring constant of the first master spring 56 is set much larger than the spring constant of the second master spring 59 in the third embodiment, mainly the second master spring 59 elastically deforms and the travel of the second master piston 58 increases as the travel of the brake pedal 12 increases.

Thus, the mounting load of the second master spring 59 is set smaller than the load that occurs at a point of the travel of the brake pedal 12 at which a brake request is recognized (brake request: ON). The larger the mounting load of the second master spring 59, the shorter the travel of the second master piston 58 becomes, which is desirable in terms of the requirement for the endurance of seal members, etc. Conversely, the smaller the mounting load of the second master spring 59, the more effectively the flow of brake fluid to the stroke simulator 24 can be suppressed, which is also desirable.

Referring again to FIG. 6, the travel of the brake pedal 12 further increases and enters region C where a brake request is made. In region C, the travel of the second master piston 58 remains substantially unchanged despite the increase in the travel of the brake pedal 12, and the travel of the first master piston 55 increases, instead of the second master piston 58, as in the second embodiment.

In the third embodiment, the travel of the second master piston 58 is reduced by setting the mounting loads and the spring constants as described above, which provides an advantage that the required endurance of seal members, etc. can be reduced.

In the third embodiment, the characteristic of the first simulator spring 78 may alternatively be adjusted in the same manner that the characteristic of the first master spring 56 is adjusted. That is, the configuration employed in the third embodiment may be modified such that the mounting load of the first simulator spring 78 is smaller than the mounting load of the second master spring 59 and the spring constant of the first simulator spring 78 is larger than the spring constant of the second master spring 59. In this case, too, the same effects and advantages may be achieved.

While the invention has been described with reference to the example embodiment thereof, it is to be understood that the invention is not limited to the described embodiment and construction. To the contrary, the invention is intended to cover various modifications and equivalent arrangements. In addition, while the various elements of the example embodiment are shown in various combinations and configurations, other combinations and configurations, including more, less or only a single element, are also within the sprit and scope of the invention.

## Claims

1. A brake system **characterized by** comprising:
a master cylinder (14) that includes a cylinder chamber (57, 61) containing hydraulic fluid that is pressurized in accordance with an amount by which a brake control portion (12) is operated;
a wheel cylinder (20) that applies a braking force to a wheel when supplied with the hydraulic fluid;
a stroke simulator (24) that, when supplied with the hydraulic fluid, produces reactive force in response to the operation of the brake control portion;
a stroke simulator disconnecting mechanism, provided in a hydraulic passage (25, 63) that extends from the cylinder chamber (57, 61) of the master cylinder to the stroke simulator (24), that disconnects the stroke simulator (24) from the master cylinder (14) when the hydraulic fluid flows from the master cylinder to the wheel cylinder by mechanically interrupting a flow of the hydraulic fluid through the hydraulic passage (25, 63) in response to the operation of the brake control portion, wherein the stroke simulator disconnecting mechanism is adapted to start the disconnecting operation before the hydraulic fluid flows from the master cylinder (14) to the stroke simulator (24) in response to the operation of the brake control portion.

2. The brake system according to claim 1, wherein
a master piston (55, 58), in which an in-piston passage (63) is formed, is slidably provided in the master cylinder (14), wherein the in-piston passage forms a portion of the hydraulic passage, and
the stroke simulator disconnecting mechanism mechanically interrupts the flow of the hydraulic fluid through the hydraulic passage by sliding the master piston (55, 58), and is adapted to cause the master piston (55, 58) to start sliding before the hydraulic fluid flows from the master cylinder (14) to the stroke simulator (70) in response to the operation of the brake control portion.

3. The brake system according to claim 2, wherein
the master piston includes a first piston (55) that is slidably provided in the master cylinder and is linked to the brake control portion; and a second piston (58) that is slidably provided in the master cylinder and is linked to the brake control portion via the first piston, and the in-piston passage being formed in the second piston,
the stroke simulator (24) includes a simulator piston (70) that moves when supplied with the hydraulic fluid pressurized by the master cylinder, and
the stroke simulator disconnecting mechanism mechanically interrupts the flow of the hydraulic fluid through the hydraulic passage by sliding the second piston (70), and is adapted to cause the second piston (70) to start sliding before the simulator piston (70) starts moving in response to the operation of the brake control portion.

4. The brake system according to claim 3, wherein
the master cylinder (14) includes a second elastic member (59) that impels the second piston (58) towards an initial position of the second piston, and
the stroke simulator (24) includes a simulator elastic member (78) that impels the simulator piston (70) towards an initial position of the simulator piston, and
a mounting load of the simulator elastic member (78) is greater than the mounting load of the second elastic member (59).

5. The brake system according to claim 4, wherein
the master cylinder (14) further includes a first elastic member (56) that impels the first piston (55) towards an initial position of the first piston, and
a mounting load of the second elastic member (59) is smaller than a mounting load of the first elastic member (56).

6. The brake system according to claim 5, wherein
the master cylinder (14) includes a linking member (104) via which the first piston (55) and the second piston (58) are linked to each other, the linking member is arranged to define an initial interval between the first piston and the second piston, to prohibit the first piston and the second piston from moving away from each other beyond the initial interval, and to allow the first piston and the second piston to move towards each other, and
the linking member (104) is arranged to set an initial state in which the interval between the first elastic member (56) and the second elastic member (59) equals the initial interval, and in which the mounting load of the first elastic member (56) acts on the first elastic member.

7. The brake system according to claim 4, wherein
the master cylinder (14) further includes a first elastic member (56) that impels the first piston (55) towards an initial position of the first piston,
a mounting load of the first elastic member (56) is smaller than a mounting load of the second elastic member (59), and
a spring constant of the first elastic member (56) is greater than a spring constant of the second elastic member (59).

8. The brake system according to claim 4, wherein
the master cylinder (14) includes a first elastic member (56) that impels the first piston towards an initial position of the first piston, and
a mounting load of the second elastic member (59) is greater than the mounting load of the first elastic member (56).

9. The brake system, according to claim 4, wherein
a mounting load of the simulator elastic member (78) is smaller than a mounting load of the second elastic member (59), and
a spring constant of the simulator elastic member (78) is greater than a spring constant of the second elastic member (59).

10. The brake system according to claim 3, wherein
the master cylinder (14) includes a second elastic member (59) that impels the first piston (58) towards an initial position of the second piston,
the stroke simulator (24) includes a simulator elastic member (78) that impels the simulator piston (70) towards an initial position of the simulator piston, and
the sum of a mounting load of the simulator elastic member (78) and a sliding resistance of the simulator piston (70) is greater than the sum of the mounting load of the second master spring (59) and a sliding resistance of the second piston (58).

11. A stroke simulator disconnecting mechanism of a brake system, comprising
a disconnecting portion, provided in a hydraulic passage (25, 63) that extends from a cylinder chamber of a master cylinder (14) to a stroke simulator (24), that disconnects the stroke simulator from the master cylinder when hydraulic fluid flows from the master cylinder to a wheel cylinder by mechanically interrupting a flow of the hydraulic fluid through the hydraulic passage in response to an operation of a brake control portion,
wherein the disconnecting portion starts interrupting the flow of the hydraulic fluid through the hydraulic passage (25, 63) before the hydraulic fluid flows out from the master cylinder to the stroke simulator in response to the operation of the brake control portion.

12. A method for disconnecting a stoke simulator of a brake system, comprising:
starting, when it is necessary to supply hydraulic fluid from a master cylinder (14) to a wheel cylinder (20), interrupting a flow of the hydraulic fluid through a hydraulic passage (25, 63) between the master cylinder (14) and a stroke simulator (24) before the hydraulic fluid flows from the master cylinder (14) to the stroke simulator (24) in response to an operation of a brake control portion.
